# EUROPEAN PATENT SPECIFICATION

(11) **EP 4 248 290 B1**
(45) Date of publication and mention of the grant of the patent: **03.09.2025**
(21) Application number: 21811309.0
(22) Date of filing: 12.11.2021
(51) Int. Cl.: G05D 1/00, B65G 1/04

(54) **METHOD, SYSTEM AND COMPUTER PROGRAM PRODUCT FOR CONTROLLING MOVEMENT OF A PLURALITY OF CONTAINER HANDLING VEHICLES**
VERFAHREN, SYSTEM UND COMPUTERPROGRAMMPRODUKT ZUR STEUERUNG DER BEWEGUNG EINER VIELZAHL VON CONTAINERHANDHABUNGSFAHRZEUGEN
PROCÉDÉ, SYSTÈME ET PRODUIT DE PROGRAMME INFORMATIQUE DESTINÉS À COMMANDER LE DÉPLACEMENT D'UNE PLURALITÉ DE VÉHICULES DE TRANSPORT DE CONTENEURS

(30) Priority: 17.11.2020 NO 20201251
(43) Date of publication of application: 27.09.2023
(73) Proprietor: Autostore Technology AS, 5578 Nedre Vats (NO)
(72) Inventor: HEGGEBØ, Jørgen Djuve, 5580 ØLEN (NO)
(74) Representative: Kilburn & Strode LLP
(86) International application number: PCT/EP2021/081559
(87) International publication number: WO 2022/106318

(56) References cited:
- WO-A1-2017/121512
- WO-A2-2019/206672

## Description

### FIELD OF THE INVENTION

The present invention relates to an automated storage and retrieval system for storage and retrieval of storage containers handled by container handling vehicles, and more specifically to a method, system and computer program for controlling movement of a plurality of container handling vehicles in physical connection.

### BACKGROUND AND PRIOR ART

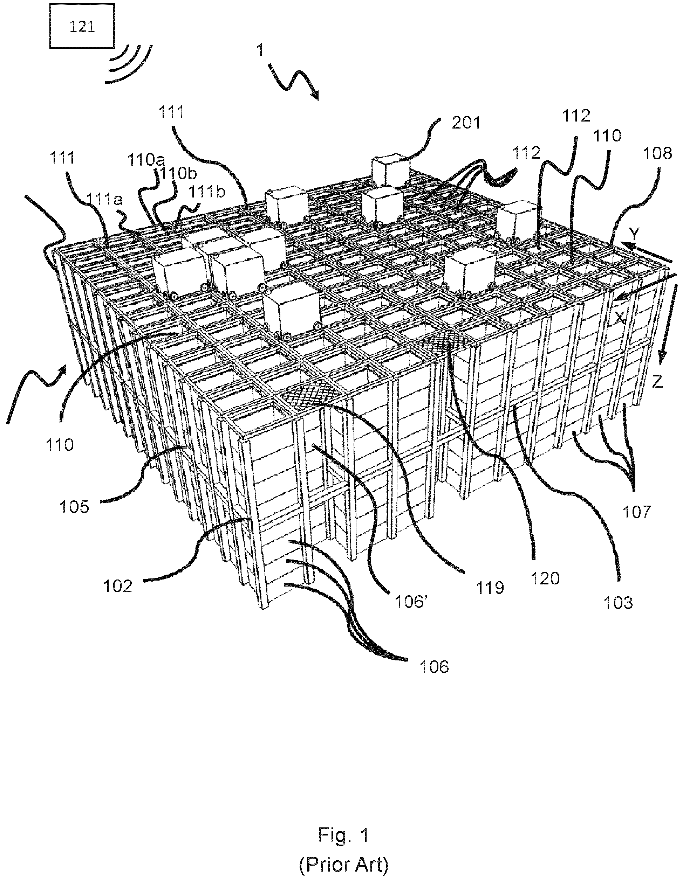

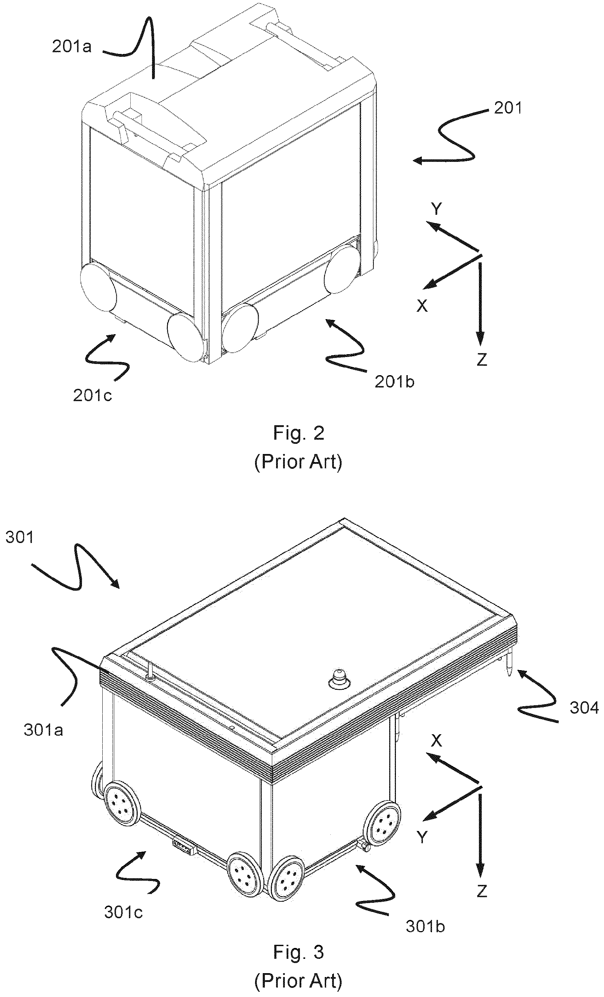

Fig. 1 discloses a typical prior art automated storage and retrieval system 1 with a framework structure 100 and Fig. 2 and 3 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in fig. 3 indicated with reference number 304. The gripping device of the container handling device 201 is located within the vehicle body 201a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3 shows an alternative configuration of a container handling vehicle 301 with a cantilever construction. Such a vehicle is described in detail in e.g. NO317366.

Fig. 4 shows another container handling vehicle, which is in the form of a container delivery vehicle 401 that comprises a container carrier arranged above a vehicle body 401a to receive a storage container 106. The container delivery vehicle 401 comprises drive means 401b in first direction X, and drive means 401c in the second direction Y, similar to that of the other aforementioned container handling vehicles 201, 301.

The central cavity container handling vehicles 201 shown in Fig. 2 may have a footprint that covers an area with dimensions in the X and Y directions which is generally equal to the lateral extent of a storage column 105, e.g. as is described in WO2015/193278A1. The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304, illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles specifically dedicated to the task of temporarily removing storage containers from a storage column 105. Once the target storage container 106 has been removed from the storage column 105, the temporarily removed storage containers can be repositioned into the original storage column 105. However, the removed storage containers may alternatively be relocated to other storage columns.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers positioned at or above the target position within the storage column stack 107 have been removed, the container handling vehicle 201,301 positions the storage container 106 at the desired position. The removed storage containers may then be lowered back into the storage column 105, or relocated to other storage columns.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 121 which typically is computerized and which typically comprises a database for keeping track of the storage containers 106.

WO2019/086237, describes a storage system comprising a multi trolley vehicle for transporting storage containers. The multi trolley vehicle comprises a plurality of trolleys coupled to each other and a first and second drive vehicles.

CN211033920, describes a material storage system comprising a push-pull assembly for driving a skip car to move along a circulating conveying line.

US2018162639, describes a storage system comprising diverting means adapted to divert containers from a moving means to a storage positions and from the storage positions to the moving means.

WO2017/121512, describes a storage system, where the container handling vehicles are arranged with sensors that can detect the location of the vehicle, and proximity sensor to detect the location of nearby vehicles, and communicate that information to the control system. The control system communicates with a plurality of container handling vehicles and commands the container handling vehicles to form a "train" of vehicles, i.e. a plurality of container handling vehicles proximately arranged in series and arranged to move with one another in tandem. The assembly of the train is accomplished with help of the sensors in the container handling vehicles, by the control system's knowledge about the container handling vehicles' relative positions, or a combination of both. However, the position of a container handling vehicle on the rail system is not known with certainty until it has passed a track crossing, after which the position of the container handling vehicle may be transmitted to the control system which processes this information. This results in a delay due to the command being relayed through, and processed in, the control system, and in insufficient positioning information for effective train driving for the container handling vehicles. Various methodologies to mitigate this problem is described, such as adding proximity sensors on each container handling vehicle or physical coupling such as latches, magnetic coupling etc.

WO2019/206672 describes, in accordance with its abstract, a support vehicle for performing support operations in an automated storage and retrieval system. The support vehicle comprises a vehicle body. The support vehicle comprises a drive system comprising wheels provided in a lower part of the vehicle body, where the drive system being configured to drive the support vehicle along a track system of the automated storage and retrieval system. The support vehicle comprises a connection system provided on a first side of the support vehicle. The connection system comprises a connector member protruding through a aperture of the vehicle body. The connection system comprises an actuator for moving the connector member in the aperture in relation to the vehicle body. The document also relates to an automated storage and retrieval system.

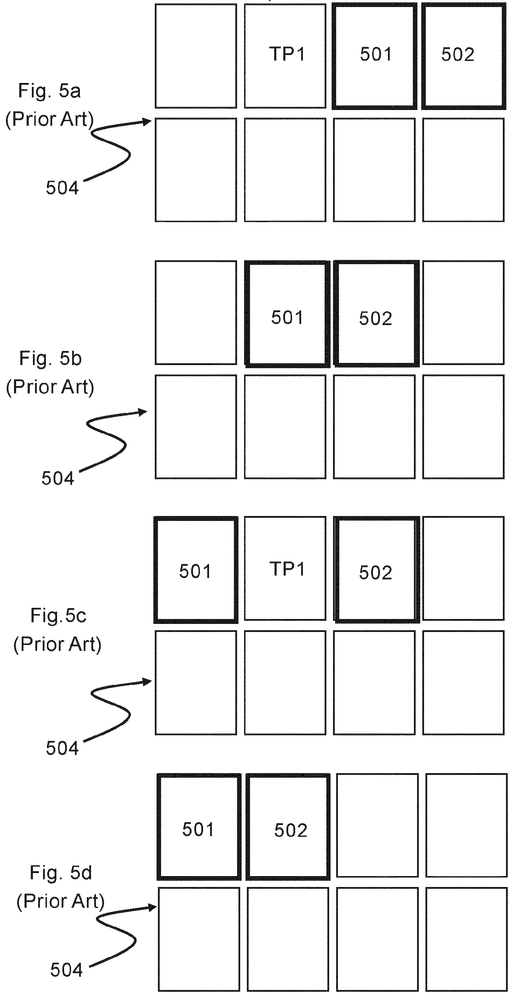

The delay is particularly problematic around ports and similar where the container handling vehicles has a tendency to queue up. This is illustrated with reference to Figs. 5a - 5d. A first and second container handling vehicles 501, 502 both have the same grid cell as their final target position TP1. The grid cell will typically be a port, where the container handling vehicles performs actions such as lifting and lowering storage containers.

Fig. 5a illustrates the first step where the first container handling vehicle 501 is instructed to move to the final target position TP1, and the second container handling vehicle 501 is instructed to move the position (grid cell) next to the final target position TP1.

Fig. 5b illustrates the next step where the first container handling vehicle 501 has completed its actions in the final target position TP1, and starts to move out of TP1. The second container handling vehicle 502 does not move.

Fig. 5c illustrates the next step where the first container handling vehicle 501 is out of TP1, that is the first container handling vehicle 501 has passed a track crossing on the rail system 108. After the first container handling vehicle 501 is all out of TP1, it sends a confirmation message to the control system that is has moved out of TP1. The second container handling vehicle 502 does not move.

Fig. 5d illustrates the next step, where the second container handling vehicle 502 has been instructed to move into the final target position TP1.

The present invention regards a solution for queue driving of container handling vehicles in order to save time around ports avoiding the need to wait for the confirmation messages and instructions to move.

The invention hence solves the problem by letting the container handling vehicles 501, 502 queue up mechanically. The container handling vehicles 501, 502 drives bumper to bumper without actually having anything holding them together. They stay bumper to bumper by having the last container handling vehicle drive a little faster than the front container handling vehicles, and by letting the front container handling vehicle brake a little more than the last container handling vehicle.

The solution may also be used for longer trains, in which case a third container handling vehicle moves faster than the second container handling vehicle, a fourth container handling vehicle moves faster than the third container handling vehicle and so on.

### SUMMARY OF THE INVENTION

The present invention is set forth and characterized in the independent claims, while the dependent claims describe other characteristics of the invention.

In one aspect he present invention relates to a method of controlling movement of a plurality of container handling vehicles on a rail system arranged at least partially across a top of framework structure of an automated storage and retrieval system, on which rail system the plurality of container handling vehicles are operable to handle storage containers, and where the following steps are performed by a control system which is in communication with a local controller in each container handling vehicle,
instructing a first container handling vehicle to move in a first direction towards a grid cell designated as a first target position on the rail system, and
instructing a second container handling vehicle to move in the first direction towards the first target position such that the second container handling vehicle physically contacts the first container handling vehicle, and the second container handling vehicle after contact applies a push force on the first container handling vehicle to maintain physical contact.

An advantage of this invention is that it allows a plurality of container handling vehicles to queue up mechanically in order to save time around ports avoiding the need to wait for the confirmation messages and instructions to move.

The target position may be any position on the rail system. The target position may be a final position on the rail system, such as port position, or the target position may be any intermediate positions on its way to a final position. The vehicle may for example be instructed to move to a first position on the rail system where the vehicle waits for another vehicle to pass, before getting instructions to move to a second position in step-by-step instructions.

Instructing to apply a push force may comprise instructing the second container handling vehicle to exceed a non-pushing force required for movement of the second container handling vehicle. The non-pushing force may be exceeded by 2 - 25%, preferably 2 - 10 %, or most preferably 3 - 8 %.

The push force and the non-pushing force may be determined by measuring power usage of the second container handling vehicle.

Instructing to apply a push force may comprise instructing the second container vehicle to move according to a movement vector exceeding a corresponding movement vector of the first container handling vehicle in the first direction. The corresponding movement vector of the first container handling vehicle in the first direction may be exceeded by 2 - 25%, preferably 2 - 10 %, or most preferably 3 - 8 %.

In one embodiment, the method may further comprise after determining that the first container handling vehicle has not moved within a predetermined time interval, stopping applying the push force on the first container handling vehicle. The determination that the first container handling vehicle has not moved within the predetermined time interval may comprise determining with the second container handling vehicle that the second container handling vehicle has not moved within the predetermined time interval.

In one embodiment, the method may further comprise initiating an emergency stop of the second container handling vehicle after determining, with the second container handling vehicle, a deceleration above a predefined threshold.

In one embodiment, the method may further comprise upon determining with the second container handling vehicle that the first container handling vehicle is moving, increasing the push force on the first container handling vehicle.

In a second aspect, the present invention also relates to a an automated storage and retrieval system comprising a plurality of container handling vehicles on a rail system arranged at least partially across a top of framework structure of the automated storage and retrieval system, on which rail system the plurality of container handling vehicles are operable to handle storage containers, and a control system adapted to be in communication with the local controller in each controller handling vehicle, the control system further being adapted to perform the steps of:
instructing a first container handling vehicle to move in a first direction towards a grid cell designated as a first target position on the rail system;
instructing a second container handling vehicle to move in the first direction towards the first target position such that the second container handling vehicle physically contacts the first container handling vehicle, and the second container handling vehicle after contact applies a push force on the first container handling vehicle to maintain physical contact.

Instructing to apply a push force may comprise instructing the second container handling vehicle to exceed a non-pushing force required for default movement of the second container handling vehicle. The non-pushing force may be exceeded by 2 - 25%, preferably 2 - 10 %, or most preferably 3 - 8 %.

The push force and the non-pushing force may be determined by measuring power usage of the second container handling vehicle.

Instructing to apply a push force may comprise instructing the second container vehicle to move according to a movement vector exceeding a corresponding movement vector of the first container handling vehicle in the first direction. The corresponding movement vector of the first container handling vehicle in the first direction may be exceeded by 2 - 25%, preferably 2 - 10 %, or most preferably 3 - 8 %.

The second container handling vehicle may be adapted to stop applying the push force on the first container handling vehicle after determining that the first container handling vehicle has not moved within a predetermined time interval.

The second container handling vehicle may be adapted to determine that the first container handling vehicle has not moved within the predetermined time interval by determining that the second container handling vehicle has not moved within the predetermined time interval.

In one embodiment, the system may further be adapted to initiate an emergency stop of the second container handling vehicle after determining, with the second container handling vehicle, a deceleration above a predefined threshold.

The second container handling vehicle may be adapted to upon determining that the first container handling vehicle is moving, increasing the push force on the first container handling vehicle.

The contact areas between the first container handling vehicle and the second container handling vehicle may provided with a low friction protection surface.

In a third aspect, the present invention also relates to a computer program product for a control system described above, wherein the computer program product comprising instructions that when performed on the control system performs the method described above.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilever for carrying storage containers underneath.

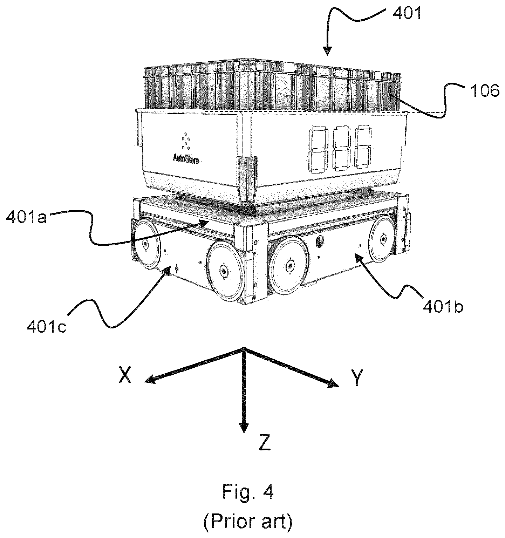

Fig. 4 is a perspective view of a prior art container handling vehicle having a cantilever for carrying storage containers underneath.
Figs. 5a - 5d is a schematic illustration of a prior art.

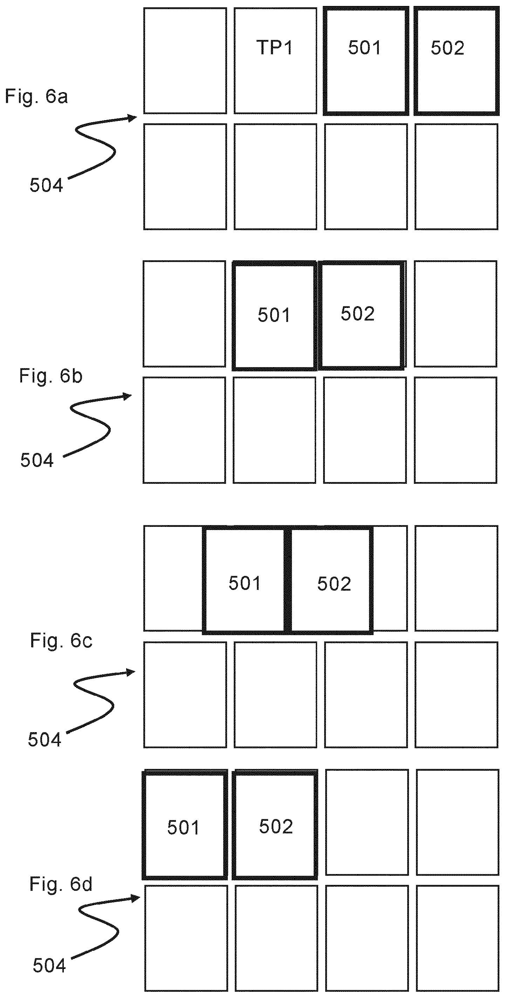

Figs. 6a - 6d is a schematic illustration of a method according to an embodiment of the present invention.

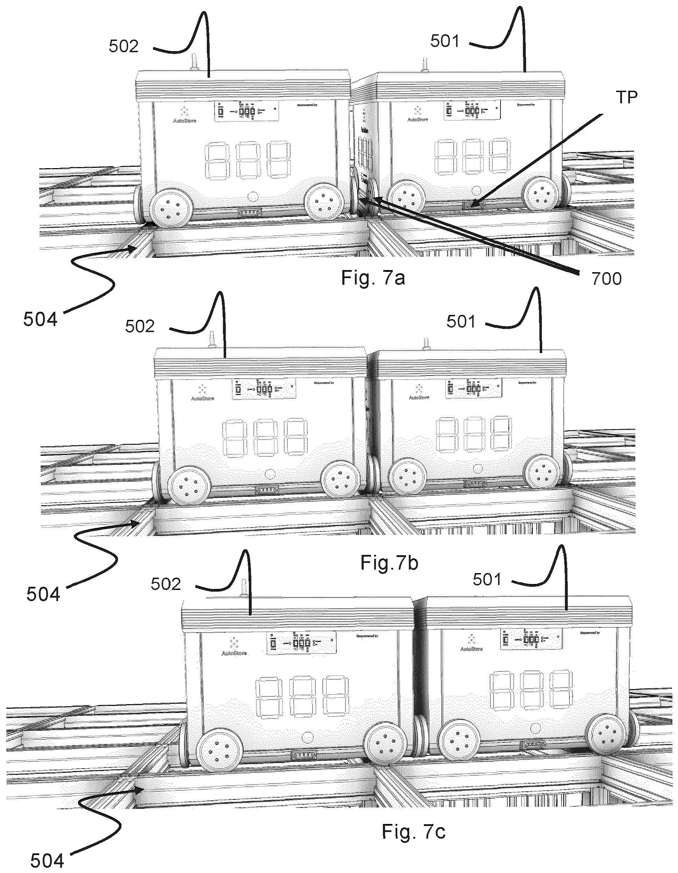

Figs. 7a - 7c is perspective view of a system according to an embodiment of the present invention.

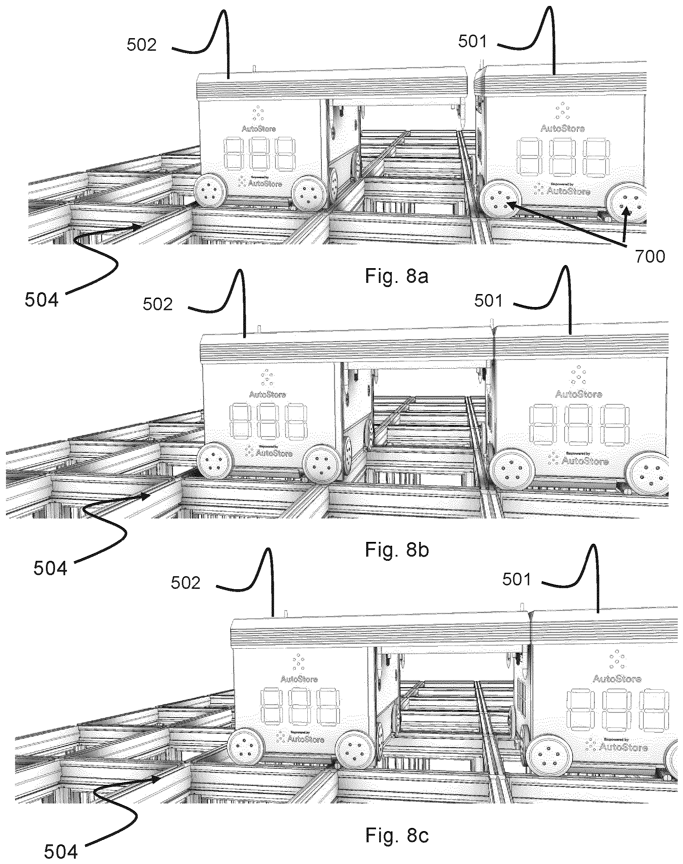

Figs. 8a - 8c is perspective view of a system according to an embodiment of the present invention.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3, i.e. a number of upright members 102 and a number of horizontal members 103, which are supported by the upright members 102, and further that the framework structure 100 comprises a first, upper rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700x700 columns and a storage depth of more than twelve containers.

The present invention relates to a system and method that allows a plurality of container handling vehicles to form a "train" of vehicles, i.e. a plurality of container handling vehicles arranged in series or queues and arranged to move with one another in tandem. This save time around ports avoiding the need to wait for the confirmation messages and instructions to move. Compared with the prior art method described with reference to Fig. 5a - 5d, the inventive method saves approximately 1.5 s per operation. Given sufficient capacity of container handling vehicles, the inventive method saves 450 seconds per hour for a port nominally receiving 300 storage containers per hour, this gives a 12.5 % increase in efficiency.

One embodiment of the automated storage and retrieval system according to the invention will now be discussed in more detail with reference to Figs 6a - 6d, 7a -7c and 8a - 8c.

Figs. 6a - 6d schematically illustrates a situation where the first and second container handling vehicle 501, 502 both have grid cell TP1 as their designated first target position.

In Fig. 6a, the first container handling vehicle 501 is instructed to move in a first direction towards TP1.

Then in Fig. 6b, the second container handling vehicle 502 is instructed to move in the first direction towards TP1 into physical contact with the first container handling vehicle 501. After contact, the second container handling vehicle 502 applies a push force on the first container handling vehicle 501, i.e. urge against the first container handling vehicle 501, to maintain physical contact.

In Fig 6c, when the first container handling vehicle 501 is finished in TP1 it begins to move out of TP1 and the second container handling vehicle 502 follows in contact with the first container handling vehicle 501 by applying the push force.

In Fig 6d, when the first container handling vehicle 501 is out of TP1, the second container handling vehicle 502 is ready in TP1. The second container handling vehicle 502 move the first container handling device 501 without having to wait for any confirmation messages and/or instructions to move.

Fig. 7a illustrates a second container handling vehicle 502 moving in the first direction towards the first target position TP1. TP1 is in this example the position of the first container handling vehicle 501. TP1 is also a storage column 105 where both the first container handling vehicle 501 and the second container handling vehicle 502 have been instructed to retrieve storage containers from, for example, as part of a digging process. TP1 may also be a port position.

Fig. 7b illustrates the second container handling vehicle 502 physically contacting the first container handling vehicle 501. After contacting the first container handling vehicle 501, the second container handling vehicle 502 applies a push force, i.e. is urging against the first container handling vehicle 501. The second container handling vehicle 502 may continue to apply the push force indefinitely, but in order to avoid burned/damaged electronics will stop applying the push force if the first container handling vehicle 501 does not move within a timeout period.

Fig. 7c illustrates that second container handling vehicle 502 moves with the first container handling vehicle 501 when the first container handling vehicle starts to move away from TP1. The second container handling vehicle 502 may be arranged to determine that the first container handling vehicle 501 is moving. Upon determining that the first container handling vehicle 501 is moving, the second container handling vehicle 502 may increase the push force on the first container handling vehicle 501. The second container handling vehicle 502 may apply a low push force while standing still and waiting for the first container handling vehicle 501 to move. Upon determining that the first container handling vehicle 501 is moving, the second container handling vehicle 502 may follow the first container handling vehicle 501 using a higher force to keep in contact and avoid bumping. Applying a low force while waiting may avoid burned electronics and/or wear on mechanical components. Determining that the first container handling vehicle 501 is moving may be determined based on change in power usage for the second container handling vehicle 502. Alternatively, the second container handling vehicle 502 may be provided with pressure sensors in the contact area between the first and second container handling vehicle 501, 502 that measures the applied force and/or change in applied force.

In one embodiment the second container handling vehicle 502 is instructed to apply a push force exceeding a non-pushing force required for movement of the second container handling vehicle 502. The non-pushing force may be the inertia to movement that has to be overcome before the second container handling vehicle 502 starts to move along the rail system from stationary, or the force required to keep the second container handling vehicle 502 to move along the rail system by itself. The non-pushing force may be given by the total weight of the second container handling device 502 and/or other driving configurations of the second container handling device 502.

When the push force is defined as a force exceeding the non-pushing force, the second container handling vehicle 502 may dynamically adjust the push force based on feedback so that the amount of push force is kept within a tight range of just nudging the first container handling device 501 and as it moves adjusting the output of the second container handling vehicle to keep within that range. The second container handling vehicle 502 may determine the push force and the non-pushing force by measuring power usage of the second container handling vehicle 502. The power use may provide the feedback to dynamically adjust the amount of push force.

The non-pushing force may be exceeded by 2 - 25 %, 2 - 10 % or 3 - 8% to provide the necessary push force.

In another embodiment, the push force is defined by instructing the second container handling vehicle 502 to move according to a movement vector in the direction of the first container handling vehicle 501. The movement vector of the second container handling vehicle 502 exceeds a corresponding movement vector of the first container handling vehicle 501:
Acceleration of the second container handling vehicle 502 > Acceleration of the first container handling vehicle 501.
Speed of the second container handling vehicle 502 > Speed of the first container handling vehicle 501.
Deceleration of the second container handling vehicle 502 < Deceleration of the first container handling vehicle 501.

The movement vector of the first container handling vehicle 501 in the first direction may be exceeded by 2 - 25 %, 2 - 10 % or 3 - 8% to provide the necessary push force.

The first and second container handling vehicle 501, 502 are configured to allow more unexpected behaviour when driving in queue formation than when driving alone before reporting errors to the control system. Still, if the first container handling vehicle 501 fails, the second container handling vehicle 502 should be instructed by the control system to initiate an emergency stop. Errors in the in the communication system, delays in the control system, delays in the communications system, crashes on the rail system etc. may prohibit the control system to instruct the container handling vehicle 502 to stop. The second container handling vehicle 502 may therefore be adapted to initiate an emergency stop of the second container handling vehicle 502 after determining, with the second container handling vehicle 502, a deceleration above a predefined threshold. This determination may be based on measurements of the push force using power usage, external sensor or other means of measuring force.

Figs. 7a - 7c illustrate both container handling vehicles 501, 502 of the cantilever type 301 moving in the X-direction, and container handling vehicles 501, 502 of the cavity type 201 moving in either X- or Y-direction. In order to avoid damage to the container handling vehicles 501, 502, e.g., from metal debris that ends up in the rails or in the electronics etc., the contact surfaces 700 is provided with a low friction protection surface, e.g. a gliding surface.

Figs. 8a - 8c illustrate the same movement of two container handling vehicles 501, 502 of the cantilever type 301 moving in the Y-direction. It is otherwise similar to the sequence of figs. 7a- 7c.

In one embodiment the queue of container handling vehicles may comprise more than two container handling vehicles 501, 502. In that case a third container handling vehicle applies a larger push force than the second container handling vehicle 502, a fourth container handling vehicle applies a larger push force than the third container handling vehicle and so on for each container handling vehicle further back in the queue of container handling vehicles.

A plurality of container handling vehicles may also drive in queue for a first distance, and then split into several smaller queues. Container handling vehicles in front of the container handling vehicles that split off may continue at the current speed, whereas container handling vehicles behind the container handling vehicles that split off will have to slow down. After splitting the smaller queues will reconfigure and continue as described above.

In the preceding description, various aspects of the container handling vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present claims.

### LIST OF REFERENCE NUMBERS

Prior art (figs 1-4):
   - 1: Prior art automated storage and retrieval system
   - 100: Framework structure
   - 102: Upright members of framework structure
   - 103: Horizontal members of framework structure
   - 104: Storage grid
   - 105: Storage column
   - 106: Storage container
   - 106': Particular position of storage container
   - 107: Stack
   - 108: Rail system
   - 110: Parallel rails in first direction (X)
   - 110a: First rail in first direction (X)
   - 110b: Second rail in first direction (X)
   - 111: Parallel rail in second direction (*Y*)
   - 111a: First rail of second direction (Y)
   - 111b: Second rail of second direction (Y)
   - 112: Access opening
   - 119: First port column
   - 120: Second port column
   - 121: Control system
   - 201: Prior art storage container vehicle
   - 201a: Vehicle body of the storage container vehicle 201
   - 201b: Drive means / wheel arrangement, first direction (X)
   - 201c: Drive means / wheel arrangement, second direction (*Y*)
   - 301: Prior art cantilever storage container vehicle
   - 301a: Vehicle body of the storage container vehicle 301
   - 301b: Drive means in first direction (X)
   - 301c: Drive means in second direction (*Y*)
   - 304: Gripping device
   - 401: Prior art storage container vehicle
   - 401a: Vehicle body of the storage container vehicle 401
   - 401b: Drive means / wheel arrangement, first direction (X)
   - 401c: Drive means / wheel arrangement, second direction (*Y*)
   - X: First direction
   - Y: Second direction
   - Z: Third direction
Figs 5 - 8:
   - TP1: Target position
   - 501: First container handling vehicle
   - 502: Second container handling vehicle
   - 504: Storage grid
   - 700: Gliding surface

## Claims

1. A method of controlling movement of a plurality of container handling vehicles (201, 301, 401) on a rail system (108) arranged at least partially across a top of framework structure (100) of an automated storage and retrieval system (1), on which rail system (108) the plurality of container handling vehicles (201, 301, 401) are operable to handle storage containers (106), and where the following steps are performed by a control system (121) which is in communication with a local controller in each container handling vehicle (201, 301, 401):
instructing a first container handling vehicle (501) to move in a first direction towards a grid cell designated as a first target position (TP1) on the rail system (108);
instructing a second container handling vehicle (502) to move in the first direction towards the first target position (TP1) such that the second container handling vehicle (502) physically contacts the first container handling vehicle (501), and the second container handling vehicle (502) after contact applies a push force on the first container handling vehicle (501) to maintain physical contact.

2. The method according to claim 1, wherein instructing to apply a push force comprises instructing the second container handling vehicle to exceed a non-pushing force required for movement of the second container handling vehicle.

3. The method according to claim 2, wherein the non-pushing force is exceeded by 2 - 25%, preferably 2 - 10 %, or most preferably 3 - 8 %.

4. The method according to claim 2 or 3, wherein the push force and the non-pushing force is determined by measuring power usage of the second container handling vehicle.

5. The method according to any preceding claim, wherein instructing to apply a push force comprises instructing the second container vehicle to move according to a movement vector exceeding a corresponding movement vector of the first container handling vehicle in the first direction, wherein the movement vector exceeds the corresponding movement vector if:
an acceleration of the second container handling vehicle in the first direction exceeds an acceleration of the first container handling vehicle in the first direction;
a speed of the second container handling vehicle in the first direction exceeds a speed of the first container handling vehicle in the first direction; or
a deceleration of the first container handling vehicle in the first direction exceeds a deceleration of the second container handling vehicle in the first direction.

6. The method according to claim 5, wherein the corresponding movement vector of the first container handling vehicle in the first direction is exceeded by 2 - 25%, preferably 2 - 10 %, or most preferably 3 - 8 %.

7. The method according to any of the preceding claims, wherein the method further comprises after determining that the first container handling vehicle has not moved within a predetermined time interval, stopping applying the push force on the first container handling vehicle.

8. The method according to claim 7, wherein the determination that the first container handling vehicle has not moved within the predetermined time interval comprises determining with the second container handling vehicle that the second container handling vehicle has not moved within the predetermined time interval.

9. The method according to any of the preceding claims, wherein the method further comprising initiating an emergency stop of the second container handling vehicle after determining, with the second container handling vehicle, a deceleration above a predefined threshold.

10. The method according to any of the preceding claims, wherein the method further comprises upon determining with the second container handling vehicle that the first container handling vehicle is moving, increasing the push force on the first container handling vehicle.

11. An automated storage and retrieval system (1) comprising a plurality of container handling vehicles (201, 301, 401) on a rail system (108) arranged at least partially across a top of framework structure (100) of the automated storage and retrieval system (1), on which rail system (108) the plurality of container handling vehicles (201,301, 401) are operable to handle storage containers (106), and a control system (121) adapted to be in communication with a local controller in each container handling vehicle (201,301, 401), the control system (121) further being adapted to perform the steps of:
instructing a first container handling vehicle (501) to move in a first direction towards a grid cell designated as a first target position (TP1) on the rail system (108);
instructing a second container handling vehicle (502) to move in the first direction towards the first target position (TP1) such that the second container handling vehicle physically contacts the first container handling vehicle, and the second container handling vehicle after contact applies a push force on the first container handling vehicle to maintain physical contact.

12. The system according to claim 11, wherein instructing to apply a push force comprises instructing the second container handling vehicle to exceed a non-pushing force required for default movement of the second container handling vehicle.

13. The system according to claim 12, wherein the non-pushing force is exceeded by 2 - 25%, preferably 2 - 10 %, or most preferably 3 - 8 %.

14. The system according to claim 12 or 13, wherein the push force and the non-pushing force is determined by measuring power usage of the second container handling vehicle.

15. The system according to any of claims 11 to 14, wherein instructing to apply a push force comprises instructing the second container vehicle to move according to a movement vector exceeding a corresponding movement vector of the first container handling vehicle in the first direction, wherein the movement vector exceeds the corresponding movement vector if:
an acceleration of the second container handling vehicle in the first direction exceeds an acceleration of the first container handling vehicle in the first direction;
a speed of the second container handling vehicle in the first direction exceeds a speed of the first container handling vehicle in the first direction; or
a deceleration of the first container handling vehicle in the first direction exceeds a deceleration of the second container handling vehicle in the first direction.

16. The system according to claim 15, wherein the corresponding movement vector of the first container handling vehicle in the first direction is exceeded by 2 - 25%, preferably 2 - 10 %, or most preferably 3 - 8 %.

17. The system according to any of claims 11 - 16, wherein the second container handling vehicle is adapted to stop applying the push force on the first container handling vehicle after determining that the first container handling vehicle has not moved within a predetermined time interval.

18. The system according to claim 17, wherein the second container handling vehicle is adapted to determine that the first container handling vehicle has not moved within the predetermined time interval by determining that the second container handling vehicle has not moved within the predetermined time interval.

19. The system according to any of claims 11 - 18, wherein the system is further adapted to initiate an emergency stop of the second container handling vehicle after determining, with the second container handling vehicle, a deceleration above a predefined threshold.

20. The system according to any of claims 11 - 19, wherein the second container handling vehicle is adapted to upon determining that the first container handling vehicle is moving, increasing the push force on the first container handling vehicle.

21. The system according to any of claims 11 - 20, wherein contact areas between the first container handling vehicle and the second container handling vehicle is provided with a low friction protection surface.

22. Computer program product for a control system (121) in the system of claims 11 - 21, wherein the computer program product comprising instructions that when performed on the control system performs the method according to claims 1 - 10.

## Patentansprüche

1. Verfahren zur Steuerung der Bewegung mehrerer Containerhandhabungsfahrzeuge (201, 301, 401) auf einem Schienensystem (108), das zumindest teilweise über einer Oberseite der Rahmenstruktur (100) eines automatisierten Ein- und Auslagersystems (1) angeordnet ist, wobei auf dem Schienensystem (108) die mehreren Containerhandhabungsfahrzeuge (201, 301, 401) betreibbar sind, um Lagercontainer (106) zu handhaben, und wobei die folgenden Schritte von einem Steuersystem (121) durchgeführt werden, das in Kommunikation mit einer lokalen Steuerung in jedem Containerhandhabungsfahrzeug (201, 301, 401) steht:
Anweisen eines ersten Containerhandhabungsfahrzeugs (501), sich in einer ersten Richtung zu einer Gitterzelle zu bewegen, die als eine erste Zielposition (TP1) auf dem Schienensystem (108) bezeichnet wird;
Anweisen eines zweiten Containerhandhabungsfahrzeugs (502), sich in der ersten Richtung zu der ersten Zielposition (TP1) zu bewegen, so dass das zweite Containerhandhabungsfahrzeug (502) in physischen Kontakt mit dem ersten Containerhandhabungsfahrzeug (501) kommt und das zweite Containerhandhabungsfahrzeug (502) nach Kontakt eine Schubkraft auf das erste Containerhandhabungsfahrzeug (501) ausübt, um einen physischen Kontakt aufrechtzuerhalten.

2. Verfahren nach Anspruch 1, wobei das Anweisen, eine Schubkraft auszuüben, umfasst, das zweite Containerhandhabungsfahrzeug anzuweisen, eine Nicht-Schubkraft zu überschreiten, die für die Bewegung des zweiten Containerhandhabungsfahrzeugs erforderlich ist.

3. Verfahren nach Anspruch 2, wobei die Nicht-Schubkraft um 2 - 25 %, vorzugsweise 2 - 10 %, oder am meisten bevorzugt 3 - 8 % überschritten wird.

4. Verfahren nach Anspruch 2 oder 3, wobei die Schubkraft und die Nicht-Schubkraft durch Messen der Leistungsaufnahme des zweiten Containerhandhabungsfahrzeugs bestimmt werden.

5. Verfahren nach einem der vorhergehenden Ansprüche, wobei das Anweisen, eine Schubkraft anzuwenden, umfasst, das zweite Containerfahrzeug anzuweisen, sich gemäß einem Bewegungsvektor zu bewegen, der einen entsprechenden Bewegungsvektor des ersten Containerhandhabungsfahrzeugs in der ersten Richtung überschreitet, wobei der Bewegungsvektor den entsprechenden Bewegungsvektor überschreitet, wenn:
eine Beschleunigung des zweiten Containerhandhabungsfahrzeugs in der ersten Richtung eine Beschleunigung des ersten Containerhandhabungsfahrzeugs in der ersten Richtung überschreitet;
eine Geschwindigkeit des zweiten Containerhandhabungsfahrzeugs in der ersten Richtung eine Geschwindigkeit des ersten Containerhandhabungsfahrzeugs in der ersten Richtung überschreitet; oder
eine Verlangsamung des ersten Containerhandhabungsfahrzeugs in der ersten Richtung eine Verlangsamung des zweiten Containerhandhabungsfahrzeugs in der ersten Richtung überschreitet.

6. Verfahren nach Anspruch 5, wobei der entsprechende Bewegungsvektor des ersten Containerhandhabungsfahrzeugs in der ersten Richtung um 2 - 25 %, vorzugsweise 2 - 10 %, oder am meisten bevorzugt 3 - 8 % überschritten wird.

7. Verfahren nach einem der vorhergehenden Ansprüche, wobei das Verfahren nach dem Bestimmen, dass sich das erste Containerhandhabungsfahrzeug nicht innerhalb eines vorbestimmten Zeitintervalls bewegt hat, ferner umfasst, das Ausüben der Schubkraft auf das erste Containerhandhabungsfahrzeug zu unterbrechen.

8. Verfahren nach Anspruch 7, wobei das Bestimmen, dass sich das erste Containerhandhabungsfahrzeug nicht innerhalb des vorbestimmten Zeitintervalls bewegt hat, umfasst, mit dem zweiten Containerhandhabungsfahrzeug zu bestimmen, dass sich das zweite Containerhandhabungsfahrzeug nicht innerhalb des vorbestimmten Zeitintervalls bewegt hat.

9. Verfahren nach einem der vorhergehenden Ansprüche, wobei das Verfahren ferner, nach dem Bestimmen, mit dem zweiten Containerhandhabungsfahrzeug, einer Verlangsamung über einer vordefinierten Schwelle, umfasst, einen Notstopp des zweiten Containerhandhabungsfahrzeugs zu initiieren.

10. Verfahren nach einem der vorhergehenden Ansprüche, wobei das Verfahren ferner, bei Bestimmen, mit dem zweiten Behälterhandhabungsfahrzeug, dass sich das erste Behälterhandhabungsfahrzeug bewegt, umfasst, die Schubkraft auf das erste Containerhandhabungsfahrzeug zu erhöhen.

11. Automatisiertes Ein- und Auslagersystem (1), umfassend mehrere Containerhandhabungsfahrzeuge (201, 301, 401) auf einem Schienensystem (108), das zumindest teilweise über einer Oberseite der Rahmenstruktur (100) des automatisierten Ein- und Auslagersystems (1) angeordnet ist, wobei auf dem Schienensystem (108) die mehreren Containerhandhabungsfahrzeuge (201, 301, 401) betreibbar sind, um Lagercontainer (106) zu handhaben, und ein Steuersystem (121), das dazu angepasst ist, mit einer lokalen Steuerung in jedem Containerhandhabungsfahrzeug (201, 301, 401) in Kommunikation zu sein, wobei das Steuersystem (121) ferner dazu ausgelegt ist, die folgenden Schritte durchzuführen:
Anweisen eines ersten Containerhandhabungsfahrzeugs (501), sich in einer ersten Richtung zu einer Gitterzelle zu bewegen, die als eine erste Zielposition (TP1) auf dem Schienensystem (108) bezeichnet wird;
Anweisen eines zweiten Containerhandhabungsfahrzeugs (502), sich in der ersten Richtung zu der ersten Zielposition (TP1) zu bewegen, so dass das zweite Containerhandhabungsfahrzeug in physischen Kontakt mit dem ersten Containerhandhabungsfahrzeug kommt und das zweite Containerhandhabungsfahrzeug nach Kontakt eine Schubkraft auf das erste Containerhandhabungsfahrzeug ausübt, um einen physischen Kontakt aufrechtzuerhalten.

12. System nach Anspruch 11, wobei das Anweisen, eine Schubkraft auszuüben, umfasst, das zweite Containerhandhabungsfahrzeug anzuweisen, eine Nicht-Schubkraft zu überschreiten, die für eine Standardbewegung des zweiten Containerhandhabungsfahrzeugs erforderlich ist.

13. System nach Anspruch 12, wobei die Nicht-Schubkraft um 2 - 25 %, vorzugsweise 2 - 10 %, oder am meisten bevorzugt 3 - 8 % überschritten wird.

14. System nach Anspruch 12 oder 13, wobei die Schubkraft und die Nicht-Schubkraft durch Messen der Leistungsaufnahme des zweiten Containerhandhabungsfahrzeugs bestimmt werden.

15. System nach einem der Ansprüche 11 bis 14, wobei das Anweisen, eine Schubkraft anzuwenden, umfasst, das zweite Containerfahrzeug anzuweisen, sich gemäß einem Bewegungsvektor zu bewegen, der einen entsprechenden Bewegungsvektor des ersten Containerhandhabungsfahrzeugs in der ersten Richtung überschreitet, wobei der Bewegungsvektor den entsprechenden Bewegungsvektor überschreitet, wenn:
eine Beschleunigung des zweiten Containerhandhabungsfahrzeugs in der ersten Richtung eine Beschleunigung des ersten Containerhandhabungsfahrzeugs in der ersten Richtung überschreitet;
eine Geschwindigkeit des zweiten Containerhandhabungsfahrzeugs in der ersten Richtung eine Geschwindigkeit des ersten Containerhandhabungsfahrzeugs in der ersten Richtung überschreitet; oder
eine Verlangsamung des ersten Containerhandhabungsfahrzeugs in der ersten Richtung eine Verlangsamung des zweiten Containerhandhabungsfahrzeugs in der ersten Richtung überschreitet.

16. System nach Anspruch 15, wobei der entsprechende Bewegungsvektor des ersten Containerhandhabungsfahrzeugs in der ersten Richtung um 2 - 25 %, vorzugsweise 2 - 10 %, oder am meisten bevorzugt 3 - 8 % überschritten wird.

17. System nach einem der Ansprüche 11 - 16, wobei das zweite Containerhandhabungsfahrzeug dazu ausgelegt ist, nach Bestimmen, dass sich das erste Containerhandhabungsfahrzeug innerhalb eines vorbestimmten Zeitintervalls nicht bewegt hat, das Anwenden der Schubkraft auf das erste Containerhandhabungsfahrzeug zu unterbrechen.

18. System nach Anspruch 17, wobei das zweite Containerhandhabungsfahrzeug dazu ausgelegt ist zu bestimmen, dass sich das erste Containerhandhabungsfahrzeug innerhalb des vorbestimmten Zeitintervalls nicht bewegt hat, indem bestimmt wird, dass sich das zweite Containerhandhabungsfahrzeug innerhalb des vorbestimmten Zeitintervalls nicht bewegt hat.

19. System nach einem der Ansprüche 11 - 18, wobei das System ferner dazu ausgelegt ist, nach Bestimmen, mit dem zweiten Containerhandhabungsfahrzeug, dass eine Verlangsamung oberhalb einer vordefinierten Schwelle ist, einen Notstopp des zweiten Containerhandhabungsfahrzeugs zu initiieren.

20. System nach einem der Ansprüche 11 - 19, wobei das zweite Containerhandhabungsfahrzeug dazu angepasst ist, bei Bestimmen, dass sich das erste Containerhandhabungsfahrzeug bewegt, die Schubkraft auf das erste Containerhandhabungsfahrzeug zu erhöhen.

21. System nach einem der Ansprüche 11 - 20, wobei Kontaktbereiche zwischen dem ersten Containerhandhabungsfahrzeug und dem zweiten Containerhandhabungsfahrzeug mit einer reibungsarmen Schutzfläche versehen sind.

22. Computerprogrammprodukt für ein Steuersystem (121) in dem System nach einem der Ansprüche 11 - 21, wobei das Computerprogrammprodukt Anweisungen umfasst, die, wenn sie auf dem Steuersystem ausgeführt werden, das Verfahren nach einem der Ansprüche 1 - 10 durchführen.

## Revendications

1. Procédé de commande des déplacements d'une pluralité de véhicules de manutention de récipient (201, 301, 401) sur un système de rails (108) disposé au moins partiellement sur une partie supérieure d'une structure (100) d'un système d'entreposage et de prélèvement automatisé (1), la pluralité de véhicules de manutention de récipient (201, 301, 401) étant manœuvrables sur ledit système de rails (108) pour la manutention de récipients d'entreposage (106), et les étapes suivantes étant exécutées par un système de commande (121) qui est en communication avec un dispositif de commande local dans chaque véhicule de manutention de récipient (201, 301, 401) :
donner l'instruction à un premier véhicule de manutention de récipient (501) de se déplacer dans une première direction vers une cellule de grille désignée comme premier emplacement cible (TP1) sur le système de rails (108) ;
donner l'instruction à un second véhicule de manutention de récipient (502) de se déplacer dans la première direction vers le premier emplacement cible (TP1) de telle sorte que le second véhicule de manutention de récipient (502) entre physiquement en contact avec le premier véhicule de manutention de récipient (501), et que le second véhicule de manutention de récipient (502), après l'entrée en contact, applique une force exerçant une poussée sur le premier véhicule de manutention de récipient (501) afin de maintenir le contact physique.

2. Procédé selon la revendication 1, dans lequel le fait de donner l'instruction d'appliquer une force exerçant une poussée comprend le fait de donner au second véhicule de manutention de récipient l'instruction d'excéder une force n'exerçant pas de poussée requise pour un déplacement du second véhicule de manutention de récipient.

3. Procédé selon la revendication 2, dans lequel la force n'exerçant pas de poussée est excédée de 2 à 25 %, de préférence de 2 à 10 %, ou le plus préférablement de 3 à 8 %.

4. Procédé selon la revendication 2 ou 3, dans lequel la force exerçant une poussée et la force n'exerçant pas de poussée sont déterminées en mesurant une consommation d'énergie du second véhicule de manutention de récipient.

5. Procédé selon l'une quelconque des revendications précédentes, dans lequel le fait de donner l'instruction d'appliquer une force exerçant une poussée comprend le fait de donner au second véhicule de manutention de récipient l'instruction de se déplacer selon un vecteur de déplacement excédant un vecteur de déplacement correspondant du premier véhicule de manutention de récipient dans la première direction, le vecteur de déplacement excédant le vecteur de déplacement correspondant si :
une accélération du second véhicule de manutention de récipient dans la première direction excède une accélération du premier véhicule de manutention de récipient dans la première direction ;
une vitesse du second véhicule de manutention de récipient dans la première direction excède une vitesse du premier véhicule de manutention de récipient dans la première direction ; ou
une décélération du premier véhicule de manutention de récipient dans la première direction excède une décélération du second véhicule de manutention de récipient dans la première direction.

6. Procédé selon la revendication 5, dans lequel le vecteur de déplacement correspondant du premier véhicule de manutention de récipient dans la première direction est excédé de 2 à 25 %, de préférence de 2 à 10 %, ou le plus préférablement de 3 à 8 %.

7. Procédé selon l'une quelconque des revendications précédentes, le procédé comprenant, en outre, après avoir déterminé que le premier véhicule de manutention de récipient ne s'est pas déplacé avant la fin d'un intervalle de temps prédéterminé, le fait d'arrêter l'application de la force exerçant une poussée sur le premier véhicule de manutention de récipient.

8. Procédé selon la revendication 7, dans lequel le fait de déterminer que le premier véhicule de manutention de récipient ne s'est pas déplacé avant la fin de l'intervalle de temps prédéterminé comprend le fait de déterminer avec le second véhicule de manutention de récipient que le second véhicule de manutention de récipient ne s'est pas déplacé avant la fin de l'intervalle de temps prédéterminé.

9. Procédé selon l'une quelconque des revendications précédentes, le procédé comprenant, en outre, le fait de déclencher un arrêt d'urgence du second véhicule de manutention de récipient après avoir déterminé, avec le second véhicule de manutention de récipient, qu'une décélération est supérieure à un seuil prédéfini.

10. Procédé selon l'une quelconque des revendications précédentes, le procédé comprenant, en outre, lorsqu'il est déterminé avec le second véhicule de manutention de récipient que le premier véhicule de manutention de récipient se déplace, le fait d'augmenter la force exerçant une poussée sur le premier véhicule de manutention de récipient.

11. Système d'entreposage et de prélèvement automatisé (1) comprenant une pluralité de véhicules de manutention de récipient (201, 301, 401) sur un système de rails (108) disposé au moins partiellement sur une partie supérieure d'une structure (100) du système d'entreposage et de prélèvement automatisé (1), la pluralité de véhicules de manutention de récipient (201, 301, 401) étant manœuvrables sur ledit système de rails (108) pour la manutention de récipients d'entreposage (106), et un système de commande (121) propre à être en communication avec un dispositif de commande local dans chaque véhicule de manutention de récipient (201, 301, 401), le système de commande (121) étant, en outre, propre à exécuter les étapes suivantes :
donner l'instruction à un premier véhicule de manutention de récipient (501) de se déplacer dans une première direction vers une cellule de grille désignée comme premier emplacement cible (TP1) sur le système de rails (108) ;
donner l'instruction à un second véhicule de manutention de récipient (502) de se déplacer dans la première direction vers le premier emplacement cible (TP1) de telle sorte que le second véhicule de manutention de récipient entre physiquement en contact avec le premier véhicule de manutention de récipient, et que le second véhicule de manutention de récipient, après l'entrée en contact, applique une force exerçant une poussée sur le premier véhicule de manutention de récipient afin de maintenir le contact physique.

12. Système selon la revendication 11, dans lequel le fait de donner l'instruction d'appliquer une force exerçant une poussée comprend le fait de donner au second véhicule de manutention de récipient l'instruction d'excéder une force n'exerçant pas de poussée requise pour un déplacement par défaut du second véhicule de manutention de récipient.

13. Système selon la revendication 12, dans lequel la force n'exerçant pas de poussée est excédée de 2 à 25 %, de préférence de 2 à 10 %, ou le plus préférablement de 3 à 8 %.

14. Système selon la revendication 12 ou 13, dans lequel la force exerçant une poussée et la force n'exerçant pas de poussée sont déterminées en mesurant une consommation d'énergie du second véhicule de manutention de récipient.

15. Système selon l'une quelconque des revendications 11 à 14, dans lequel le fait de donner l'instruction d'appliquer une force exerçant une poussée comprend le fait de donner au second véhicule de manutention de récipient l'instruction de se déplacer selon un vecteur de déplacement excédant un vecteur de déplacement correspondant du premier véhicule de manutention de récipient dans la première direction, le vecteur de déplacement excédant le vecteur de déplacement correspondant si :
une accélération du second véhicule de manutention de récipient dans la première direction excède une accélération du premier véhicule de manutention de récipient dans la première direction ;
une vitesse du second véhicule de manutention de récipient dans la première direction excède une vitesse du premier véhicule de manutention de récipient dans la première direction ; ou
une décélération du premier véhicule de manutention de récipient dans la première direction excède une décélération du second véhicule de manutention de récipient dans la première direction.

16. Système selon la revendication 15, dans lequel le vecteur de déplacement correspondant du premier véhicule de manutention de récipient dans la première direction est excédé de 2 à 25 %, de préférence de 2 à 10 %, ou le plus préférablement de 3 à 8 %.

17. Système selon l'une quelconque des revendications 11 à 16, dans lequel le second véhicule de manutention de récipient est propre à arrêter l'application de la force exerçant une poussée sur le premier véhicule de manutention de récipient après avoir déterminé que le premier véhicule de manutention de récipient ne s'est pas déplacé avant la fin d'un intervalle de temps prédéterminé.

18. Système selon la revendication 17, dans lequel le second véhicule de manutention de récipient est propre à déterminer que le premier véhicule de manutention de récipient ne s'est pas déplacé avant la fin de l'intervalle de temps prédéterminé en déterminant que le second véhicule de manutention de récipient ne s'est pas déplacé avant la fin de l'intervalle de temps prédéterminé.

19. Système selon l'une quelconque des revendications 11 à 18, le système étant, en outre, propre à déclencher un arrêt d'urgence du second véhicule de manutention de récipient après avoir déterminé, avec le second véhicule de manutention de récipient, qu'une décélération est supérieure à un seuil prédéfini.

20. Système selon l'une quelconque des revendications 11 à 19, dans lequel le second véhicule de manutention de récipient est, lorsqu'il est déterminé que le premier véhicule de manutention de récipient se déplace, propre à augmenter la force exerçant une poussée sur le premier véhicule de manutention de récipient.

21. Système selon l'une quelconque des revendications 11 à 20, dans lequel des points de contact entre le premier véhicule de manutention de récipient et le second véhicule de manutention de récipient sont pourvus d'une surface de protection à faible frottement.

22. Produit-programme informatique pour un système de commande (121) dans le système selon les revendications 11 à 21, le produit-programme informatique comprenant des instructions qui, lorsqu'elles sont exécutées sur le système de commande, mettent en œuvre le procédé selon les revendications 1 à 10.
